# EUROPÄISCHE PATENTSCHRIFT

(11) **EP 3 770 016 B1**
(45) Veröffentlichungstag und Bekanntmachung des Hinweises auf die Patenterteilung: **02.09.2026**
(21) Anmeldenummer: 19188198.6
(22) Anmeldetag: 24.07.2019
(51) Int. Cl.: B60Q 1/30, B60Q 1/32, B60Q 3/217, B60Q 3/64, B60Q 3/54, B60Q 1/00, B60Q 1/26, F21S 43/245, F21S 43/239, F21S 43/50

(54) **BELEUCHTUNGSVORRICHTUNG FÜR EIN PERSONEN- UND/ODER GÜTERTRANSPORTMITTEL ODER FÜR EIN EXTERNES ODER INTERNES VERKLEIDUNGSBAUTEIL EINES PERSONEN- UND/ODER GÜTERTRANSPORTMITTELS, EXTERNES ODER INTERNES VERKLEIDUNGSBAUTEIL SOWIE PERSONEN- UND/ODER GÜTERTRANSPORTMITTEL MIT EINER DERARTIGEN BELEUCHTUNGSVORRICHTUNG**
LIGHTING DEVICE FOR A PASSENGER AND / OR GOODS TRANSPORT MEANS OR FOR AN EXTERNAL OR INTERNAL CLADDING COMPONENT OF A PASSENGER AND / OR GOODS TRANSPORT MEANS, EXTERNAL OR INTERNAL CLADDING COMPONENT, AND PASSENGER AND / OR GOODS TRANSPORT MEANS COMPRISING SUCH A LIGHTING DEVICE
DISPOSITIF D'ÉCLAIRAGE POUR UN MOYEN DE TRANSPORT DES PERSONNES ET / OU DES MARCHANDISES OU POUR UN COMPOSANT DE REVÊTEMENT EXTERNE OU INTERNE D'UN MOYEN DE TRANSPORT DES PERSONNES ET / OU DES MARCHANDISES, COMPOSANT DE REVÊTEMENT EXTERNE OU INTERNE AINSI QUE MOYEN DE TRANSPORT DES PERSONNES ET / OU DES MARCHANDISES DOTÉ D'UN TEL DISPOSITIF D'ÉCLAIRAGE

(43) Veröffentlichungstag der Anmeldung: 27.01.2021
(73) Patentinhaber: Motherson Innovations Company Limited, London E14 5HU (GB)
(72) Erfinder: Sepp, Benjamin, 77723 Gengenbach (DE); Mohrmann, Richard, 79194 Gundelfingen (DE)
(74) Vertreter: Westphal, Mussgnug & Partner Patentanwälte mbB

(56) Entgegenhaltungen:
- WO-A1-2018/225029
- DE-A1- 102015 101 012
- DE-A1- 4 109 532
- FR-A1- 3 075 126
- GB-A- 2 566 258

## Beschreibung

Die vorliegende Offenbarung betrifft eine Beleuchtungsvorrichtung für ein Personen- und/oder Gütertransportmittel oder für ein externes oder internes Verkleidungsbauteil eines Personen- und/oder Gütertransportmittels. Weiterhin betrifft die Offenbarung ein externes oder internes Verkleidungsbauteil sowie ein Personen- und/oder Gütertransportmittel, jeweils mit einer derartigen Beleuchtungsvorrichtung.

Das Personen- und/oder Gütertransportmittel ist insbesondere als Kraftfahrzeug ausgeführt, kann aber auch ein Schiff, ein Flugzeug, ein Zug oder dergleichen sein. Wenn im Folgenden die Offenbarung in Bezug auf Fahrzeuge erläutert wird, gelten die Ausführungen gleichermaßen auch für andere Personen- und/oder Gütertransportmittel wie Schiffe, Flugzeuge, Züge oder dergleichen.

Insbesondere bei Fahrzeugen werden die Beleuchtungsvorrichtungen immer mehr zu einem prägenden Designelement, über welches eine markenspezifische Individualisierung gegenüber Fahrzeugen eines anderen Herstellers möglich wird. Allerdings ist die Gestaltungsfreiheit bei den Beleuchtungsvorrichtungen bislang vergleichsweise stark eingeschränkt, so dass sie nicht an beliebigen Stellen sowohl von externen als auch von internen Verkleidungsbauteilen wie Stoßfängern bzw. von Türverkleidungen angeordnet werden können. Ein wesentlicher Grund hierfür ist die Tatsache, dass die Verkleidungsbauteile in vielen Fällen eine komplexe Oberflächenwölbung aufweisen, die mit den bekannten Beleuchtungsvorrichtungen nicht oder nur mit sehr großem Aufwand nachgebildet werden kann.

Darüber hinaus eröffnen sich im Zuge der zunehmenden Elektrifizierung der Fahrzeuge neue Gestaltungsspielräume, bei denen die Beleuchtungsvorrichtungen auf eine bislang nicht bekannte Weise eingesetzt werden können. Da Elektromotoren im Gegensatz zu Verbrennungsmotoren keine Luftgitter mehr benötigen, können die Beleuchtungsvorrichtungen beispielsweise im Kühlergrill angeordnet werden. Luftgitter können aber dennoch vorgesehen sein, insbesondere aus Gestaltungsgründen, unterscheiden sich in diesem Fall aber deutlich von den für Verbrennungsmotoren verwendeten Luftgittern.

Damit die Beleuchtungsvorrichtungen auch bei derartigen Anwendungen zum Einsatz kommen können, müssen Sie an komplexe Oberflächengeometrien anpassbar sein, um nahtlos in die Oberfläche des betreffenden Verkleidungsbauteils des Personen- und/oder Gütertransportmittels oder in die Oberfläche des Personen- und/oder Gütertransportmittels selbst integriert werden zu können, wobei die Beleuchtungsvorrichtungen selbst nur geringen Bauraum benötigen sollen. Bekannte Beleuchtungsvorrichtungen, wie sie beispielsweise in der DE 10 2012 003 200 A1, der EP 2 628 638 A2 und der US 2015/0291085 A1 offenbart sind, können diese Anforderungen nicht oder nicht mit vertretbarem Aufwand erfüllen. Weitere Beleuchtungsvorrichtungen sind in der DE 10 2011 102 532 A1, EP 1 981 680 A1, der EP 3 144 182 A1, der DE 41 09 532 A1, der WO 2018/225029 A1, der FR 3 075 126 A1, der DE 10 2015 101 012 A1 und der GB 2 566 258 A offenbart.

Üblicherweise soll nicht die gesamte Sichtseite der Beleuchtungsvorrichtungen beleuchtet werden, sondern nur ein Teil davon. Daher weisen die Beleuchtungsvorrichtungen lichtdurchlässige Abschnitte auf, aus denen das Licht austreten kann. Beleuchtungsvorrichtungen werden vorwiegend in der Dämmerung und bei Dunkelheit eingeschaltet. Insbesondere bei großflächigen Beleuchtungsvorrichtungen tritt jedoch das Problem auf, dass sich die lichtdurchlässigen Abschnitte im Hellen, also dann, wenn die verwendeten Lichtquellen ausgeschaltet sind, deutlich von den übrigen Bereichen unterscheiden. Wenn die lichtdurchlässigen Abschnitte groß sind, können Funktionselemente der Beleuchtungsvorrichtung sichtbar sein. Hierdurch wird die optische Erscheinung der Beleuchtungsvorrichtungen negativ beeinflusst, so dass die Beleuchtungsvorrichtungen auch aus ästhetischen Gründen nur sehr bedingt eingesetzt werden können.

Aufgabe einer Ausführungsform der vorliegenden Offenbarung ist es, eine Beleuchtungsvorrichtung vorzuschlagen, mit welcher es mit einfachen und kostengünstigen Mitteln möglich ist, die Beleuchtungsvorrichtung auch bei externen oder internen Verkleidungsbauteilen einzusetzen, die eine komplexe Oberflächengeometrie aufweisen und die Beleuchtungsvorrichtung so auszugestalten, dass sie auch bei ausgeschalteten Lichtquellen eine einheitliche und ansprechende optische Erscheinung bietet.

Des Weiteren liegt einer Ausbildung der vorliegenden Offenbarung die Aufgabe zugrunde, ein Verfahren zu schaffen, mit welchem eine derartige Beleuchtungsvorrichtung auf einfache und kostengünstige Weise gefertigt werden kann. Darüber hinaus liegt einer Ausgestaltung und einer Variante der Offenbarung die Aufgabe zugrunde, ein externes oder internes Verkleidungsbauteil bzw. ein Personen- und/oder Gütertransportmittel zu schaffen, welches mit einer derartigen Beleuchtungsvorrichtung ausgerüstet werden kann.

Diese Aufgabe wird mit den in den Ansprüchen 1, 11, 13 und 14 angegebenen Merkmalen gelöst. Vorteilhafte Ausführungsformen sind Gegenstand der Unteransprüche.

Eine Ausführungsform der Offenbarung betrifft eine Beleuchtungsvorrichtung für ein Personen- und/oder Gütertransportmittel oder für ein externes oder internes Verkleidungsbauteil eines Personen- und/oder Gütertransportmittels, umfassend
- ein lichtdurchlässiges Tragelement mit einer Oberfläche,
- eine auf die Oberfläche aufgetragene Beschichtung, und
- zumindest eine Lichtquelle zum Bereitstellen von Licht im Tragelement, wobei
- die Beschichtung zumindest einen im Wesentlichen lichtundurchlässigen Abschnitt und eine Anzahl von lichtdurchlässigen Abschnitten aufweist,
- die lichtdurchlässigen Abschnitte so ausgebildet sind, dass sie bei ausgeschalteter Lichtquelle visuell dem lichtundurchlässigen Abschnitt der Beschichtung entsprechen oder nahezu entsprechen, und
- die Beleuchtungsvorrichtung Richtmittel zum Richten des von der Lichtquelle bereitgestellten Lichts zum Tragelement und insbesondere zu den lichtdurchlässigen Abschnitten aufweist.

Die vorschlagsgemäße Beleuchtungsvorrichtung ist einfach aufgebaut, so dass im Wesentlichen nur das lichtdurchlässige Tragelement an die Form des übrigen externen oder internen Verkleidungsbauteils angepasst werden muss. Daher kann die Beleuchtungsvorrichtung auch für Verkleidungsbauteile eingesetzt werden, die eine komplexe insbesondere Wölbungen beschreibende Oberflächengeometrie aufweisen. Zudem benötigt die vorschlagsgemäße Beleuchtungsvorrichtung nur wenig Bauraum, wodurch die Einsatzmöglichkeiten erhöht werden. Die Richtmittel sorgen dafür, dass das bereitgestellte Licht zumindest zum größten Teil in das Tragelement eingeleitet und daher möglichst effektiv genutzt wird.

Aufgrund der Tatsache, dass die lichtdurchlässigen Abschnitte bei ausgeschalteter Lichtquelle visuell dem benachbart angeordneten lichtundurchlässigen Abschnitten entsprechen oder nahezu entsprechen, weist die betreffende Beleuchtungsvorrichtung auf der Sichtseite eine einheitliche Erscheinung auf. Insbesondere können die lichtdurchlässigen Abschnitte bei ausgeschalteter Lichtquelle so gut wie nicht von den lichtundurchlässigen Abschnitten der Beschichtung unterschieden werden. Ein Betrachter nimmt bei ausgeschalteter Lichtquelle daher eine homogene Oberfläche war, während bei eingeschalteter Lichtquelle das Licht die Beleuchtungsvorrichtung mit einer ausreichenden Helligkeit verlassen kann, so dass Beleuchtungsfunktion der Beleuchtungsvorrichtung nicht beeinträchtigt wird.

Erfindungsgemäß ist auf eine zweite Oberfläche des Tragelements eine lichtabsorbierende Schicht aufgebracht. Für den Fall, dass die Lichtquelle von der ersten Oberfläche aus gesehen hinter der zweiten Oberfläche angeordnet ist, weist die lichtabsorbierende Schicht im Bereich der Lichtquelle eine Aussparung auf, so dass das von der Lichtquelle bereitgestellte Licht in das Tragelement eingekoppelt werden kann. Die lichtabsorbierende Schicht kann beispielsweise als eine schwarze Schicht ausgebildet sein. Hierdurch wird ein Beitrag dazu geleistet, dass die lichtdurchlässigen Abschnitte bei ausgeschalteter Lichtquelle visuell den benachbart angeordneten lichtundurchlässigen Abschnitten entsprechen oder nahezu entsprechen. Infolgedessen weist die betreffende Beleuchtungsvorrichtung auf der Sichtseite eine einheitliche Erscheinung auf.

Nach Maßgabe einer weiteren Ausführungsform besteht das lichtdurchlässige Tragelement aus Glas oder aus einem lichtdurchlässigen Kunststoff. Sowohl Glas als auch nicht durchlässiger Kunststoff stellen günstige Materialien dar, welche sich zur Bereitstellung der Beleuchtungsvorrichtung, insbesondere für das Auftragen der Beschichtung und der zweiten Beschichtung, bestens eignen. Für den Fall, dass die Beleuchtungsvorrichtung in einem Verkleidungsbauteil angeordnet werden soll, welches eine komplexe Oberflächengeometrie aufweist, bietet es sich an, einen transparenten und spritzgussfähigen Kunststoff wie PMMA (Polymethylmethacrylat) oder PC (Polycarbonat) zu verwenden. Mit dem Spritzgussverfahren lässt sich die Beleuchtungsvorrichtung auf vergleichsweise einfache und günstige Weise an die vorliegende Oberflächengeometrie anpassen.

In einer weitergebildeten nicht beanspruchten Ausführungsform weisen die Richtmittel im lichtdurchlässigen Tragelement angeordnete Lichtauskopplungsstrukturen zum Auskoppeln des Lichts auf. In dieser Ausführungsform wird gewährleistet, dass eine ausreichende Lichtmenge die Beleuchtungsvorrichtung durch die lichtdurchlässigen Abschnitte verlassen kann. Dabei wird das lichtdurchlässige Tragelement so ausgestaltet, dass das Licht gezielt zu den lichtdurchlässigen Abschnitten hin gelenkt wird. Die Lichtauskopplungsstrukturen können ähnlich wie ein Spiegel wirken, so dass das Licht von den Lichtauskopplungsstrukturen entsprechend abgelenkt wird. In dieser Ausführungsform kann die Lichtquelle auch seitlich vom lichtdurchlässigen Tragelement angeordnet sein.

Eine weitere nicht beanspruchte Ausführungsform gibt vor, dass die Richtmittel Reflektoren und/oder eine auf eine zweite Oberfläche des Tragelements aufgebrachte Reflektorschicht umfassen. Die Reflektoren können dabei auf derjenigen Seite der Lichtquelle angeordnet sein, welche dem Tragelement abgewandt angeordnet ist. Die zweite Oberfläche, auf welcher die Reflektorschicht angeordnet ist, liegt der ersten Oberfläche gegenüber. Sowohl mit den Reflektoren als auch mit der Reflektorschicht wird das von der Lichtquelle bereitgestellte Licht zu den lichtdurchlässigen Abschnitten hin gelenkt. Das von der Lichtquelle bereitgestellte Licht wird hierdurch effektiv genutzt.

Bei einer weitergebildeten Ausführungsform kann die Beschichtung als eine Lackierung ausgebildet sein oder eine Folie umfassen oder aus dieser bestehen. Die Verwendung von Folien und Lackierungen hat sich als besonders günstig erwiesen, die Beleuchtungsvorrichtung mit den lichtdurchlässigen Abschnitten zu versehen. Insbesondere bei der Verwendung von Folien ist es möglich, diese bereits vor dem Auftragen auf das lichtdurchlässige Tragelement mit Ausnehmungen zu versehen, welche die lichtdurchlässigen Abschnitte bilden, wenn die Folie auf das lichtdurchlässige Tragelement aufgebracht ist. Zusätzliche Arbeitsschritte zum Herstellen der lichtdurchlässigen Abschnitte sind in diesem Fall nicht erforderlich.

Bei einer weiteren Ausführungsform kann die Beschichtung einen Basislack umfassen, auf den eine oder mehrere Schutzschichten aufgetragen sind, die zumindest in den lichtdurchlässigen Abschnitten lichtdurchlässig sind. Insbesondere dann, wenn die Beleuchtungsvorrichtung an einem externen Verkleidungsbauteil, beispielsweise an einem Stoßfänger oder an einer Heckklappe eines Kraftfahrzeugs angeordnet wird, wird es hohen äußeren Belastungen ausgesetzt, beispielsweise Steinschlag, UV-Strahlung oder korrosiv wirkenden Substanzen. Die Schutzschichten dienen dazu, die Beleuchtungsvorrichtung vor derartigen Einflüssen zu schützen. Dabei können die Schutzschichten so ausgeführt werden, dass eine kratzfeste Class-A-Oberfläche bereitgestellt wird.

Eine weitergebildete Ausführungsform zeichnet sich dadurch aus, dass die Schutzschicht von einem Klarlack gebildet wird. Aufgrund der Tatsache, dass der Klarlack lichtdurchlässig ist, müssen keine zusätzlichen Maßnahmen ergriffen werden, die lichtdurchlässigen Abschnitte auch in der Schutzschicht vorzusehen.

Nach Maßgabe einer weiteren Ausführungsform umfasst die Beschichtung eine erste Grundierung, die zwischen dem lichtdurchlässigen Tragelement und dem Basislack angeordnet ist. Die erste Grundierung, häufig auch als Primer bezeichnet, dient einerseits dazu, das Tragelement zu schützen und andererseits die Haftbedingungen für den Basislack zu verbessern.

Eine weitere Ausführungsform zeichnet sich dadurch aus, dass die Beschichtung eine zweite Grundierung umfasst, die zwischen der ersten Grundierung und dem Basislack angeordnet ist. In diesem Fall kann sich die Auswahl der ersten Grundierung im Wesentlichen an den Oberflächeneigenschaften des Tragelements und die Auswahl der zweiten Grundierung an den Eigenschaften des Basislacks orientieren. Es werden daher eine besonders gute Haftbedingungen erreicht.

Nach Maßgabe einer weiteren Ausführungsform sind der Basislack, die erste Grundierung und/oder die zweite Grundierung zumindest teilweise lichtdurchlässig ausgestaltet. Aufgrund der Tatsache, dass zumindest eine der Grundierungen in dieser Ausführungsform lichtdurchlässig ist, müssen keine zusätzlichen Maßnahmen ergriffen werden, die lichtdurchlässigen **Ab**schnitte auch in der betreffenden Grundierung vorzusehen. Eine Ausbildung der Offenbarung betrifft ein Verfahren zum Herstellen einer Beleuchtungsvorrichtung nach einem der vorherigen Ansprüche, umfassend folgende Schritte:
- Bereitstellen eines lichtdurchlässigen Tragelements mit einer Oberfläche, und
- Auftragen einer Beschichtung auf die Oberfläche derart, dass die Beschichtung zumindest einen lichtundurchlässigen Abschnitt und eine Anzahl von lichtdurchlässigen **Ab**schnitten aufweist, wobei die lichtdurchlässigen **Ab**schnitte durch
   ∘ Maskieren oder
   ∘ unter Verwendung einer Anti-Haft-Beschichtung hergestellt werden, und
- Aufbringen einer lichtabsorbierenden Schicht auf eine zweite Oberfläche des Tragelements, wobei die lichtabsorbierende Schicht im Bereich der Lichtquelle eine Aussparung aufweist, so dass das von der Lichtquelle bereitgestellte Licht in das Tragelement eingekoppelt werden kann.

Die vorschlagsgemäße Beleuchtungsvorrichtung lässt sich mit vergleichsweise wenigen Verfahrensschritten bereitstellen, so dass die Herstellung schnell und kostengünstig ist. Vorschlagsgemäß ist vorgesehen, dass die lichtdurchlässigen Abschnitte durch Maskieren oder unter Verwendung einer Anti-Haft-Beschichtung hergestellt werden. Auf diese Weise lässt sich der lichtdurchlässige Abschnitt einfach und kostengünstig bereitstellen, insbesondere deshalb, da hier die lichtdurchlässigen Abschnitte bereits bei der Herstellung der Beschichtung entstehen. Eine nachträgliche Entfernung oder Ausdünnung ist nicht notwendig, so dass ein derartiger weiterer Arbeitsschritt entfallen kann.

Eine alternative nicht beanspruchte Ausbildung gibt vor, dass die lichtdurchlässigen Abschnitte durch Entfernen oder Ausdünnen der Beschichtung hergestellt werden. Das Entfernen oder Ausdünnen der Beschichtung in den lichtdurchlässigen ersten Bereichen ist ein vergleichsweise einfacher Arbeitsschritt, der kostengünstig durchgeführt werden kann.

Nach Maßgabe einer fortentwickelten nicht beanspruchten Ausbildung des Verfahrens wird die Beschichtung in den lichtdurchlässigen Abschnitten durch Gravieren, Ätzen oder mittels eines Lasers entfernt oder ausgedünnt. Insbesondere bei Verwendung eines Lasers kann der lichtdurchlässige Abschnitt auf sehr einfache und sehr genaue Weise bereitgestellt werden. Hierbei sei angemerkt, dass der lichtdurchlässige Abschnitt mit einem Laser auch dann bereitgestellt werden kann, wenn die Beschichtung komplett fertiggestellt worden ist. Für den Fall, dass die Beschichtung eine oder mehrere transparente Schutzschichten aufweist, kann der Laser so eingestellt werden, dass er diese Schutzschichten durchdringt und nur dort wirksam ist, wo die lichtdurchlässigen Abschnitte angeordnet werden sollen.

Eine Ausgestaltung der Offenbarung betrifft ein externes oder internes Verkleidungsbauteil für ein Personen- und/oder Gütertransportmittel, umfassend zumindest eine Beleuchtungsvorrichtung nach einer der vorherigen Ausführungsformen.

Eine Variante der Offenbarung betrifft ein Personen- und/oder Gütertransportmittel, umfassend zumindest ein externes und/oder internes Verkleidungsbauteil nach der zuvor erläuterten Ausgestaltung und/oder zumindest eine Beleuchtungsvorrichtung nach einer der vorherigen Ausführungsformen.

Die technischen Effekte und Vorteile, die sich mit dem vorschlagsgemäßen externen oder internen Verkleidungsbauteil und dem Personen- und/oder Gütertransportmittel erreichen lassen, entsprechen denjenigen, die für die vorliegende Beleuchtungsvorrichtung erörtert worden sind. Zusammenfassend sei darauf hingewiesen, dass sich das Verkleidungsbauteil und das Personen- und/oder Gütertransportmittel mit einer Beleuchtungsvorrichtung ausstatten lassen, die sich auf einfache Weise an komplexe Oberflächengeometrien anpassen lässt und zudem bei ausgeschalteter Lichtquelle eine homogene Oberfläche bereitstellt, bei welcher der Betrachter die lichtdurchlässigen Abschnitte so gut wie nicht von den benachbart angeordneten lichtundurchlässigen Abschnitten unterscheiden kann.

Beispielhafte Ausführungsformen der Offenbarung werden im Folgenden unter Bezugnahme auf die beigefügten Zeichnungen näher erläutert. Es zeigen
- Figur 1A: ein erstes, nicht erfindungsgemäßes Ausführungsbeispiel einer Beleuchtungsvorrichtung anhand einer prinzipiellen Schnittdarstellung bei eingeschalteter Lichtquelle,
- Figur 1B: das in Figur 1A dargestellte Ausführungsbeispiel der Beleuchtungsvorrichtung anhand einer prinzipiellen Draufsicht, ebenfalls bei eingeschalteter Lichtquelle,
- Figur 1C: die in Figur 1B dargestellte Beleuchtungsvorrichtung bei ausgeschalteter Lichtquelle,
- Figur 2: ein zweites, nicht erfindungsgemäßes Ausführungsbeispiel einer Beleuchtungsvorrichtung,
- Figur 3: ein drittes Ausführungsbeispiel einer vorschlagsgemäßen Beleuchtungsvorrichtung,
- Figur 4: ein viertes Ausführungsbeispiel einer vorschlagsgemäßen Beleuchtungsvorrichtung,
- Figur 5: ein fünftes, nicht erfindungsgemäßes Ausführungsbeispiel einer Beleuchtungsvorrichtung, jeweils anhand einer prinzipiellen Draufsicht und bei eingeschalteter Lichtquelle, und
- Figur 6: ein Personen-und/oder Gütertransportmittel, welches eine Anzahl von vorschlagsgemäßen Beleuchtungsvorrichtungen aufweist.

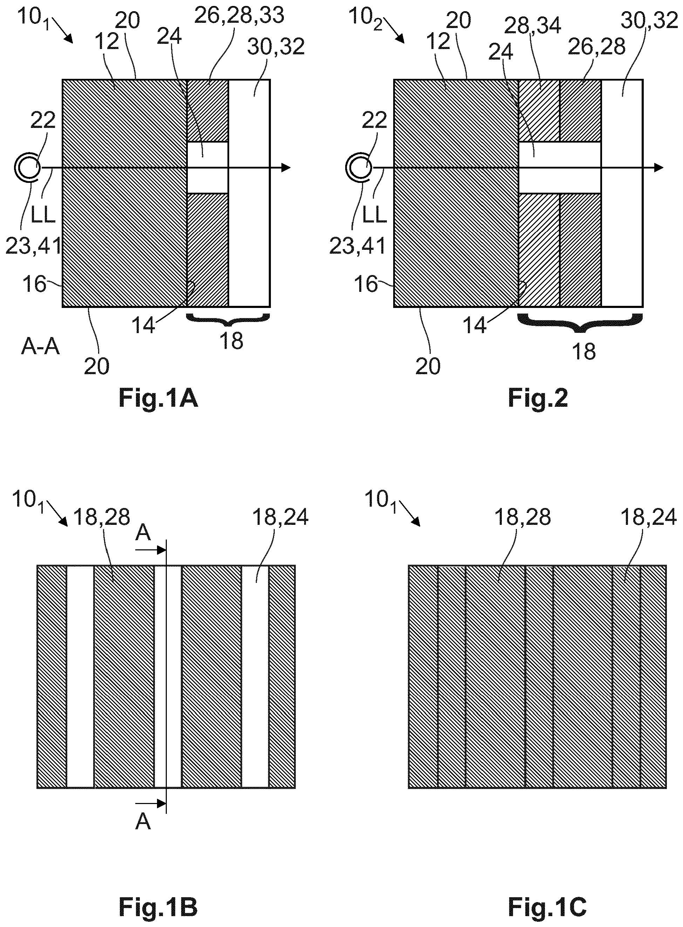

In Figur 1A ist ein erstes, nicht erfindungsgemäßes Ausführungsbeispiel einer Beleuchtungsvorrichtung 10₁ anhand einer prinzipiellen Schnittdarstellung gezeigt. Die Beleuchtungsvorrichtung 10₁ weist ein lichtdurchlässiges Tragelement 12 mit einer ersten Oberfläche 14 und einer zweiten Oberfläche 16 sowie zwei Stirnflächen 20 auf. Das lichtdurchlässige Tragelement 12 kann beispielsweise aus Glas oder einem lichtdurchlässigen Kunststoff gefertigt sein.

Auf der ersten Oberfläche 14 ist eine Beschichtung 18 aufgetragen, während die zweite Oberfläche 16 unbehandelt ist. Zudem umfasst die Beleuchtungsvorrichtung 10₁ eine Lichtquelle 22, die Lichtstrahlen LL bereitstellt, welche in das lichtdurchlässige Tragelement 12 eingeleitet werden können.

Gemäß dem ersten Ausführungsbeispiel der Beleuchtungsvorrichtung 10₁ umfasst die Beschichtung 18 einen auf das Tragelement 12 aufgetragenen, lichtundurchlässigen Basislack 26, in welchem eine Anzahl von lichtdurchlässigen Abschnitten 24 angeordnet ist. Folglich bildet der Basislack 26 lichtundurchlässige Abschnitte 28, die benachbart zu den lichtdurchlässigen Abschnitten 24 angeordnet sind.

Weiterhin umfasst die Beschichtung 18 eine Schutzschicht 30, die auf den Basislack 26 aufgetragen ist. Im ersten Ausführungsbeispiel der vorschlagsgemäßen Beleuchtungsvorrichtung 10₁ wird die Schutzschicht 30 von einem Klarlack 32 ausgebildet, der lichtdurchlässig ist. Die lichtdurchlässigen Abschnitte 24 setzen sich daher in der Schutzschicht 30 fort, ohne dass besondere Maßnahmen ergriffen werden müssen.

Die lichtdurchlässigen Abschnitte 24 können durch Entfernen oder Ausdünnen der lichtundurchlässigen Abschnitte 28, in diesem Fall des Basislacks 26, erzeugt werden. Dabei wird nur die lichtundurchlässige Schicht entfernt und das Tragelement 12 nicht angegriffen.

Bei Verwendung eines intrinsischen Lasers können die Laserstrahlen die lichtdurchlässige Schutzschicht 30 durchqueren und erst in der lichtundurchlässigen Schicht wirken. Dabei kann es genügen, die lichtundurchlässige Schicht, beispielsweise den Basislack 26, nur soweit auszudünnen, dass eine ausreichende Lichtmenge die lichtundurchlässige Schicht durchqueren kann.

Alternativ lassen sich die lichtdurchlässigen Abschnitte 24 durch Maskieren oder unter Verwendung einer Anti-Haft-Beschichtung 18 herstellen. Dabei kann der Basislack 26 auch in Form einer Folie 33 auf das Tragelement 12 aufgebracht werden. Insbesondere bei der Verwendung von Folien 33 ist es möglich, diese bereits vor dem Auftragen auf das lichtdurchlässige Tragelement 12 mit Ausnehmungen zu versehen, welche die lichtdurchlässigen Abschnitte 24 bilden, wenn die Folie 33 auf das lichtdurchlässige Tragelement 12 aufgebracht ist. Zusätzliche Arbeitsschritte zum Herstellen der lichtdurchlässigen **Ab**schnitte 24 sind in diesem Fall nicht erforderlich.

Der Strahlengang durch die Beleuchtungsvorrichtung ist in Figur 1A anhand eines Lichtstrahls LL dargestellt. Da die Lichtquelle 22 von der Beschichtung 18 aus gesehen hinter dem Tragelement 12 angeordnet ist, werden die Lichtstrahlen LL über die zweite Oberfläche 16 in das Tragelement 12 eingekoppelt. Damit eine ausreichende Lichtmenge in das Tragelement 12 eingekoppelt werden kann, sind Richtmittel 23 vorgesehen, die beispielsweise als Reflektor 41, Spiegel oder dergleichen ausgebildet sein können. Diese Richtmittel 23 sind auf der Seite der Lichtquelle 22 angeordnet, welche dem Tragelement 12 abgewandt ist. Die Richtmittel 23 lenken das Licht zum Tragelement 12 und insbesondere zu den lichtdurchlässigen Abschnitten 24 hin.

Insbesondere aus der Figur 1B, welche eine Draufsicht auf die erste Oberfläche 14 und die hierauf aufgebrachte Beschichtung 18 bei eingeschalteter Lichtquelle 22 zeigt, ist erkennbar, dass die lichtdurchlässigen Abschnitte 24 linienförmig ausgebildet sind. Die lichtdurchlässigen Abschnitte 24 können aber auch andere Formen aufweisen, beispielsweise punktförmig.

In Figur 1C ist die Beleuchtungsvorrichtung 10₁ bei ausgeschalteter Lichtquelle 22 dargestellt. Die Beschichtung 18 ist so ausgebildet, dass die lichtdurchlässigen Abschnitte 24 bei ausgeschalteter Lichtquelle 22 kaum von den benachbart angeordneten lichtundurchlässigen Abschnitten 28 der Beschichtung 18 zu unterscheiden sind. Aus der Figur 1C ist erkennbar, dass nur bei sehr genauer Betrachtung die linienförmige Ausbildung der lichtdurchlässigen Abschnitte 24 der Beschichtung 18 erkennbar ist. Von weitem jedoch weist die Beleuchtungsvorrichtung 10₁ eine sehr homogene visuelle oder optische Erscheinung auf, wenn die Lichtquelle 22 ausgeschaltet ist. Hierbei ist es hilfreich, wenn die lichtdurchlässigen Abschnitte 24 im Vergleich zu den benachbart angeordneten lichtundurchlässigen Abschnitten 28 der Beschichtung 18 eine verhältnismäßig kleine Fläche aufweisen.

In Figur 2 ist ein zweites, nicht erfindungsgemäßes Ausführungsbeispiel der Beleuchtungsvorrichtung 10₂ analog zur in Figur 1A gewählten Darstellung gezeigt. Der wesentliche Unterschied zur Beleuchtungsvorrichtung 10₁ nach dem ersten Ausführungsbeispiel ist, dass die Beschichtung 18 eine erste Grundierung 34 aufweist, die zwischen dem Tragelement 12 und dem Basislack 26 angeordnet ist. Die erste Grundierung 34 verbessert die Haftbedingungen zwischen dem Tragelement 12 und dem Basislack 26. Im zweiten Ausführungsbeispiel der vorschlagsgemäßen Beleuchtungsvorrichtung 10₂ ist die erste Grundierung 34 lichtundurchlässig, so dass sich die lichtdurchlässigen Abschnitte 24 auch in die erste Grundierung 34 hinein erstrecken.

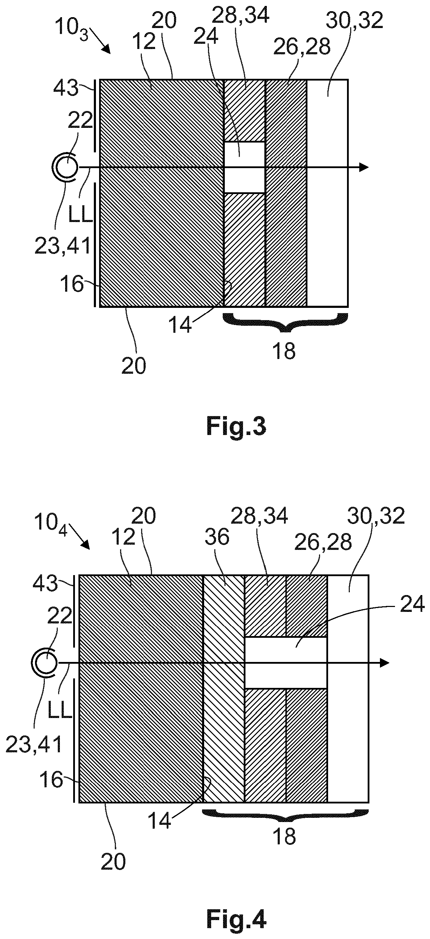

Figur 3 zeigt ein drittes Ausführungsbeispiel der vorschlagsgemäßen Beleuchtungsvorrichtung 10₃ analog zur in Figur 1A gewählten Darstellung. Die Beleuchtungsvorrichtung 10₃ nach dem dritten Ausführungsbeispiel gleicht weitgehend der Beleuchtungsvorrichtung 10₂ nach dem zweiten Ausführungsbeispiel, allerdings ist der Basislack 26 zumindest teilweise lichtdurchlässig. Folglich ist es nicht notwendig, die lichtdurchlässigen Abschnitte 24 auch im Basislack 26 vorzusehen. Vielmehr genügt es, nur die erste Grundierung 34 mit den lichtdurchlässigen Abschnitten 24 zu versehen. Zudem wird auf die zweite Oberfläche 16 eine lichtabsorbierende Schicht 43 aufgebracht, welche eine Aussparung im Bereich der Lichtquelle 22 aufweist, so dass das von der Lichtquelle bereitgestellte Licht in das Tragelement eingekoppelt werden kann. Die lichtabsorbierende Schicht 43 kann beispielsweise als eine schwarze Schicht ausgebildet sein. Hierdurch wird ein Beitrag dazu geleistet, dass die lichtdurchlässigen Abschnitte 24 bei ausgeschalteter Lichtquelle 22 visuell den benachbart angeordneten lichtundurchlässigen Abschnitten 28 entsprechen oder nahezu entsprechen.

Figur 4 zeigt ein viertes Ausführungsbeispiel der vorschlagsgemäßen Beleuchtungsvorrichtung 10₄ analog zur in Figur 1A gewählten Darstellung. Die Beleuchtungsvorrichtung 10₄ nach dem vierten Ausführungsbeispiel gleicht weitgehend der Beleuchtungsvorrichtung 10₂ nach dem zweiten Ausführungsbeispiel, allerdings ist zwischen dem Tragelement 12 und der ersten Grundierung 34 eine zweite Grundierung 36 vorgesehen. Im vierten Ausführungsbeispiel der vorschlagsgemäßen Beleuchtungsvorrichtung 10₄ ist die zweite Grundierung 36 im Gegensatz zur ersten Grundierung 34 und dem Basislack 26 lichtdurchlässig, so dass es nicht notwendig ist, die lichtdurchlässigen Abschnitte 24 auch in der zweiten Grundierung 36 vorzusehen. Die Beleuchtungsvorrichtung 10₄ nach dem vierten Ausführungsbeispiel weist ebenfalls die lichtabsorbierende Schicht 43 auf.

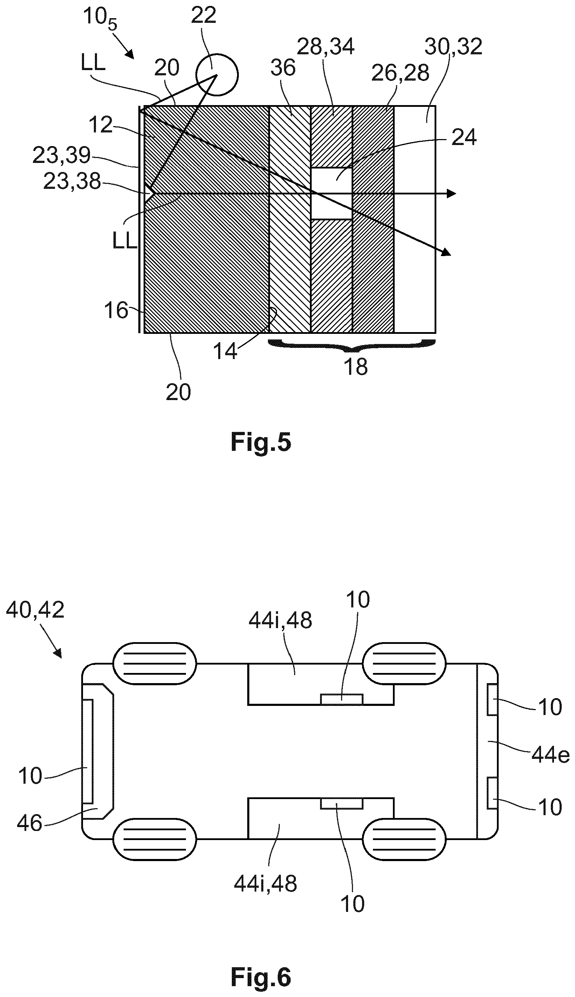

In Figur 5 ist ein fünftes, nicht erfindungsgemäßes Ausführungsbeispiel der Beleuchtungsvorrichtung 10₅ analog zur in Figur 1A gewählten Darstellung gezeigt. Wie im vierten Ausführungsbeispiel umfasst die Beleuchtungsvorrichtung 10₅ nach dem fünften Ausführungsbeispiel die auf das Tragelement 12 aufgebrachte zweite Grundierung 36, die erste Grundierung 34, die auf die zweite Grundierung 36 aufgebracht ist, den auf die erste Grundierung 34 aufgebrachten Basislack 26 und die auf den Basislack 26 aufgetragene Schutzschicht 30. Die Schutzschicht 30 wird wiederum von einem Klarlack 32 gebildet. Im fünften Ausführungsbeispiel ist nur die erste Grundierung 34 lichtundurchlässig, so dass nur die erste Grundierung 34 mit den lichtdurchlässigen Abschnitten 24 versehen ist.

Darüber hinaus ist im fünften Ausführungsbeispiel die Lichtquelle 22 seitlich vom Tragelement 12 angeordnet, so dass die Lichtstrahlen LL über die Stirnflächen 20 in das Tragelement 12 eingekoppelt werden. Im fünften Ausführungsbeispiel der Beleuchtungsvorrichtung 10₅ umfassen die Richtmittel 23 Lichtauskopplungsstrukturen 38, welche im Bereich der zweiten Oberfläche 16 des lichtdurchlässigen Tragelements 12 angeordnet sind. Prinzipiell können die Lichtauskopplungsstrukturen 38 aber auch an anderen Orten innerhalb des Tragelements 12 oder innerhalb der Beschichtung 18 angeordnet sein. Die Lichtauskopplungsstrukturen 38 können beispielsweise im Siebdruck hergestellt werden. Die Lichtauskopplungsstrukturen 38 sind so angeordnet und ausgebildet, dass sie die Lichtstrahlen LL, welche auf die Lichtauskopplungsstrukturen 38 treffen, zu denen lichtdurchlässigen Abschnitten 24 hin lenken. Hierdurch wird der Anteil des Lichts, welcher von der Lichtquelle 22 in das Tragelement 12 eingekoppelt wird und die Beleuchtungsvorrichtung 10₅ durch die lichtdurchlässigen Abschnitte 24 verlässt, vergrößert.

Weiterhin umfassen die Richtmittel 23 eine auf der zweiten Oberfläche 16 angeordnete Reflektorschicht 39, welche zusätzlich zu den Lichtauskopplungsstrukturen 38 das Licht zu den lichtdurchlässigen Abschnitten 24 hin lenkt. Zudem verhindert die Reflektorschicht 39, dass das von der Lichtquelle 22 in das Tragelement 12 eingekoppelte Licht über die zweite Oberfläche 16 aus dem Tragelement 12 austritt und somit ungenutzt verloren geht.

Unabhängig von den Ausführungsbeispielen bieten sich PVD (Physical Vapor Deposition, CVD (Chemical Vapor Deposition) oder dergleichen als Auftragsverfahren für die Beschichtung 18 an.

Für den Fall, dass die erste Grundierung 34 und/oder die zweite Grundierung 36 oder eine andere Schicht der Beschichtung 18 mit dem lichtdurchlässigen Abschnitt 24 versehen werden soll, kann dieser auf dieselbe Weise hergestellt werden wie für den Basislack 26 beschrieben.

In Figur 6 ist ein Personen- und/oder Gütertransportmittel 40 anhand einer prinzipiellen Draufsicht gezeigt, welches als ein Kraftfahrzeug 42 ausgeführt ist und insgesamt fünf der vorschlagsgemäßen Beleuchtungsvorrichtungen 10 aufweist. Zwei der Beleuchtungsvorrichtungen 10 sind in einem externen Verkleidungsbauteil 44e angeordnet, welches hier als Stoßfänger ausgebildet ist. Eine dritte der Beleuchtungsvorrichtungen 10 ist in der Heckklappe 46 des Kraftfahrzeugs 42 angeordnet. Die äußere Oberfläche der Beleuchtungsvorrichtung 10 bildet dabei einen Teil der Oberfläche des externen Verkleidungsbauteils 44e oder der Heckklappe 46. Die äußere Oberfläche schließt sich nahtlos oder nahezu nahtlos an die umgebenden Oberflächen des Kraftfahrzeugs 42 an. Zwei weitere der vorschlagsgemäßen Beleuchtungsvorrichtungen 10 sind jeweils an einem internen Verkleidungsbauteil 44i angeordnet, welche als eine Türverkleidung 48 dienen.

Bei elektrisch betriebenen Fahrzeugen stellt sich folgende Situation dar: Da Elektromotoren im Gegensatz zu Verbrennungsmotoren keine Luftgitter mehr benötigen, können die Beleuchtungsvorrichtungen 10 beispielsweise im Kühlergrill angeordnet werden. Sie können aber dennoch vorgesehen sein, insbesondere aus Gestaltungsgründen, unterscheiden sich in diesem Fall aber deutlich von den für Verbrennungsmotoren verwendeten Luftgittern.

### Bezugszeichenliste

- 10: Beleuchtungsvorrichtung
- 10₁ - 10₅: Beleuchtungsvorrichtung
- 12: Trageelement
- 14: erste Oberfläche
- 16: zweite Oberfläche
- 18: Beschichtung
- 20: Stirnfläche
- 22: Lichtquelle
- 23: Richtmittel
- 24: lichtdurchlässiger Abschnitt
- 26: Basislack
- 28: lichtundurchlässiger Abschnitt
- 30: Schutzschicht
- 32: Klarlack
- 33: Folie
- 34: erste Grundierung
- 36: zweite Grundierung
- 38: Lichtauskopplungsstrukturen
- 39: Reflektorschicht
- 40: Transportmittel
- 41: Reflektor
- 42: Kraftfahrzeug
- 43: lichtabsorbierende Schicht
- 44: Verkleidungsbauteil
- 44e: externes Verkleidungsbauteil
- 44i: internes Verkleidungsbauteil
- 46: Heckklappe
- 48: Türverkleidung

- LL: Lichtstrahlen

## Patentansprüche

1. Beleuchtungsvorrichtung (10) für ein Personen- und/oder Gütertransportmittel (40) oder für ein externes oder internes Verkleidungsbauteil (44) eines Personen- und/oder Gütertransportmittels (40), umfassend
- ein lichtdurchlässiges Tragelement (12) mit einer ersten Oberfläche (14),
- eine auf die erste Oberfläche (14) aufgetragene Beschichtung (18), und
- zumindest eine Lichtquelle (22) zum Bereitstellen von Licht im Tragelement (12), wobei
- die Beschichtung (18) zumindest einen im Wesentlichen lichtundurchlässigen Abschnitt (28) und eine Anzahl von lichtdurchlässigen Abschnitten (24) aufweist, wobei
- die lichtdurchlässigen Abschnitte (24) so ausgebildet sind, dass sie bei ausgeschalteter Lichtquelle (22) visuell dem lichtundurchlässigen Abschnitt (28) der Beschichtung (18) entsprechen oder nahezu entsprechen und
- wobei die Beleuchtungsvorrichtung (10) Richtmittel (23) zum Richten des von der Lichtquelle (22) bereitgestellten Lichts zum Tragelement (12) und insbesondere zu den lichtdurchlässigen Abschnitten (24) aufweist,
**dadurch gekennzeichnet, dass** auf eine zweite Oberfläche (16) des Tragelements (12) eine lichtabsorbierende Schicht (43) aufgebracht ist, wobei die lichtabsorbierende Schicht (43) im Bereich der Lichtquelle (22) eine Aussparung aufweist, so dass das von der Lichtquelle (22) bereitgestellte Licht in das Tragelement (12) eingekoppelt werden kann.

2. Beleuchtungsvorrichtung (10) nach Anspruch 1,
**dadurch gekennzeichnet, dass** das lichtdurchlässige Tragelement (12) aus Glas oder aus einem lichtdurchlässigen Kunststoff besteht.

3. Beleuchtungsvorrichtung (10) nach einen der vorherigen Ansprüche,
**dadurch gekennzeichnet, dass** die Beschichtung (18) als eine Lackierung ausgebildet ist oder eine Folie (33) umfasst oder aus dieser besteht.

4. Beleuchtungsvorrichtung (10) nach einen der vorherigen Ansprüche,
**dadurch gekennzeichnet, dass** die Beschichtung (18) einen Basislack (26) umfasst, auf den eine oder mehrere Schutzschichten (30) aufgetragen sind, die zumindest in den lichtdurchlässigen Abschnitten (24) lichtdurchlässig sind.

5. Beleuchtungsvorrichtung (10) nach Anspruch 4,
**dadurch gekennzeichnet, dass** die Schutzschicht (30) von einem Klarlack (32) gebildet wird.

6. Beleuchtungsvorrichtung (10) nach einem der Ansprüche 4 oder 5,
**dadurch gekennzeichnet, dass** die Beschichtung (18) eine erste Grundierung (34) umfasst, die zwischen dem lichtdurchlässigen Tragelement (12) und dem Basislack (26) angeordnet ist.

7. Beleuchtungsvorrichtung (10) nach Anspruch 6,
**dadurch gekennzeichnet, dass** die Beschichtung (18) eine zweite Grundierung (36) umfasst, die zwischen der ersten Grundierung (34) und dem Basislack (26) angeordnet ist.

8. Beleuchtungsvorrichtung (10) nach einem der Ansprüche 6 oder 7,
**dadurch gekennzeichnet, dass** der Basislack (26), die erste Grundierung (34) und/oder die zweite Grundierung (36) zumindest teilweise lichtdurchlässig ausgestaltet sind.

9. Verfahren zum Herstellen einer Beleuchtungsvorrichtung (10) nach einem der vorherigen Ansprüche, umfassend folgende Schritte:
- Bereitstellen eines lichtdurchlässigen Tragelements (12) mit einer ersten Oberfläche (14), und
- Auftragen einer Beschichtung (18) auf die erste Oberfläche (14) derart, dass die Beschichtung (18) zumindest einen lichtundurchlässigen Abschnitt (28) und eine Anzahl von lichtdurchlässigen Abschnitten (24) aufweist, wobei die lichtdurchlässigen **Ab**schnitte (24) durch
∘ Maskieren oder
∘ unter Verwendung einer Anti-Haft-Beschichtung hergestellt werden, und
- Aufbringen einer lichtabsorbierenden Schicht (43) auf eine zweite Oberfläche (16) des Tragelements (12), wobei die lichtabsorbierende Schicht (43) im Bereich der Lichtquelle (22) eine Aussparung aufweist, so dass das von der Lichtquelle (22) bereitgestellte Licht in das Tragelement (12) eingekoppelt werden kann.

10. Externes oder internes Verkleidungsbauteil (44) für ein Personen- und/oder Gütertransportmittel (40), umfassend zumindest eine Beleuchtungsvorrichtung (10) nach einem der Ansprüche 1 bis 8.

11. Personen- und/oder Gütertransportmittel (40), umfassend zumindest ein externes und/oder internes Verkleidungsbauteil (44) nach Anspruch 10 und/oder zumindest eine Beleuchtungsvorrichtung (10) nach einem der Ansprüche 1 bis 8.

## Claims

1. A lighting device (10) for a passenger and/or goods transport means (40) or for an external or internal cladding component (44) of a passenger and/or goods transport means (40), comprising
- a translucent support element (12) with a first surface (14),
- a coating (18) applied to the first surface (14), and
- at least one light source (22) to provide light in the support element (12), wherein
- the coating (18) has at least one substantially opaque section (28) and a number of translucent sections (24), wherein
- the translucent sections (24) are designed such that, when the light source (22) is switched off, they visually correspond to or almost correspond to the opaque section (28) of the coating (18) and
- wherein the lighting device (10) has directional means (23) for directing the light provided by the light source (22) to the support element (12) and in particular to the translucent sections (24),
**characterized in that** a light-absorbing layer (43) is applied to a second surface (16) of the support element (12), wherein the light-absorbing layer (43) has a recess in the region of the light source (22) so that the light provided by the light source (22) can be coupled into the support element (12).

2. The lighting device (10) according to claim 1,
**characterized in that** the translucent support element (12) is made of glass or of a translucent plastic.

3. The lighting device (10) according to any one of the preceding claims,
**characterized in that** the coating (18) is designed as a varnish or comprises or consists of a film (33).

4. The lighting device (10) according to any one of the preceding claims,
**characterized in that** the coating (18) comprises a base paint (26) onto which one or more protective layers (30) are applied, which are translucent at least in the translucent sections (24).

5. The lighting device (10) according to claim 4,
**characterized in that** the protective layer (30) is formed by a clear paint (32).

6. Th lighting device (10) according to any one of claims 4 or 5,
**characterized in that** the coating (18) comprises a first primer (34) which is arranged between the translucent support element (12) and the base paint (26).

7. The lighting device (10) according to claim 6,
**characterized in that** the coating (18) comprises a second primer (36) which is arranged between the first primer (34) and the base paint (26).

8. Th lighting device (10) according to any one of claims 6 or 7,
**characterized in that** the base paint (26), the first primer (34) and/or the second primer (36) are designed to be at least partially translucent.

9. A method for manufacturing a lighting device (10) according to any one of the preceding claims, comprising the following steps:
- providing a translucent support element (12) with a first surface (14), and
- applying a coating (18) to the first surface (14) such that the coating (18) has at least one opaque section (28) and a number of translucent sections (24), wherein the translucent sections (24) are produced by
∘ masking or
∘ using a non-stick coating, and
- applying a light-absorbing layer (43) to a second surface (16) of the support element (12), wherein the light-absorbing layer (43) has a recess in the region of the light source (22) so that the light provided by the light source (22) can be coupled into the support element (12).

10. An external or internal cladding component (44) for a passenger and/or goods transport means (40), comprising at least one lighting device (10) according to any one of claims 1 to 8.

11. A passenger and/or goods transport means (40) comprising at least one external and/or internal cladding component (44) according to claim 10 and/or at least one lighting device (10) according to any one of claims 1 to 8.

## Revendications

1. Dispositif (10) d'éclairage d'un moyen (40) de transport des personnes et/ou des marchandises ou d'un composant (44) d'habillage externe ou interne d'un moyen (40) de transport des personnes et/ou des marchandises, comprenant
- un élément (12) de support transparent ayant une première surface (14),
- un revêtement (18) déposé sur la première surface (14), et
- au moins une source (22) lumineuse pour donner de la lumière dans l'élément (12) de support, dans lequel
- le revêtement (18) a au moins une partie (28) sensiblement opaque et un certain nombre de parties (24) transparentes, dans lequel
- les parties (24) transparentes sont constituées de manière à correspondre ou à correspondre à peu près, lorsque la source (22) lumineuse est débranchée, visuellement à la partie (28) opaque du revêtement (18) et
- dans lequel le dispositif (10) d'éclairage a des moyens (23) d'orientation pour orienter la lumière donnée par la source (22) lumineuse sur l'élément (12) de support et en particulier sur les parties (24) transparentes,
**caractérisé en ce qu'**une couche (43) absorbant la lumière est déposée sur une deuxième surface (16) de l'élément (12) de support, dans lequel la couche (43) absorbant la lumière a, dans la zone de la source (22) lumineuse, un évidement de manière à ce que la lumière donnée par la source (22) . lumineuse puisse être injectée dans l'élément (12) de support.

2. Dispositif (10) d'éclairage suivant la revendication 1, **caractérisé en ce que** l'élément (12) de support transparent est en verre ou en une matière plastique transparente.

3. Dispositif (10) d'éclairage suivant l'une des revendications précédentes,
**caractérisé en ce que** le revêtement (18) est constitué sous la forme d'un vernissage ou comprend une feuille (33) ou en est constitué.

4. Dispositif (10) d'éclairage suivant l'une des revendications précédentes,
**caractérisé en ce que** le revêtement (18) comprend un vernis (26) de base, sur lequel sont déposées une ou plusieurs couches (30) de protection, qui sont transparentes au moins dans les parties (24) transparentes.

5. Dispositif (10) d'éclairage suivant la revendication 4, **caractérisé en ce que** la couche (30) de protection est formée par un vernis (32) limpide.

6. Dispositif (10) d'éclairage suivant l'une des revendications 4 ou 5,
**caractérisé en ce que** le revêtement (18) comprend une première couche (34) primaire, qui est disposée entre l'élément (12) de support transparent et le vernis (26) de base.

7. Dispositif (10) d'éclairage suivant la revendication 6, . **caractérisé en ce que** le revêtement (18) comprend une deuxième couche (36) primaire, qui est disposée entre la première couche (34) primaire et le vernis (26) de base.

8. Dispositif (10) d'éclairage suivant l'une des revendications 6 ou 7,
**caractérisé en ce que** le vernis (26) de base, la première couche (34) primaire et/ou la deuxième couche (36) primaire sont au moins en partie transparentes.

9. Procédé de fabrication d'un dispositif (10) d'éclairage suivant l'une des revendications précédentes, comprenant les stades suivants :
- se procurer un élément (12) transparent ayant une première surface (14), et
- déposer un revêtement (18) sur la première surface (14) de manière à ce que le revêtement (18) ait au moins une partie (28) opaque et un certain nombre de parties (24) transparentes, dans lequel on produit les parties (24) transparentes par
∘ masquage ou
∘ en utilisant un revêtement antiadhérent, et
- déposer une couche (43) absorbant la lumière sur une deuxième surface (16) de l'élément (12) de support, dans lequel la couche (43) absorbant la lumière a, dans la zone de la source (22) lumineuse, un évidement de manière à pouvoir injecter, dans l'élément (12) de support, la lumière donnée par la source (22) lumineuse.

10. Composant (44) d'habillage externe ou interne d'un moyen (40) de transport des personnes et/ou des marchandises, comprenant au moins un dispositif (10) d'éclairage suivant l'une des revendications 1 à 8. .

11. Moyen (40) de transport des personnes et/ou des marchandises, comprenant au moins un composant (44) d'habillage externe et/ou interne suivant la revendication 10 et/ou au moins un dispositif (10) d'éclairage suivant l'une des revendications 1 à 8. .
